# EUROPEAN PATENT APPLICATION

(11) **EP 3 185 210 A1**
(43) Date of publication of application: **28.06.2017**
(21) Application number: 15307092.5
(22) Date of filing: 22.12.2015
(51) Int. Cl.: G06T 7/00

(54) **METHOD AND APPARATUS FOR TRANSMITTING OBJECTS**

(71) Applicant: Thomson Licensing, 92130 Issy-les-Moulineaux (FR)
(72) Inventor: CHEVALLIER, Louis, 35576 Cesson-Sévigné (FR); DEMOULIN, Vincent, 35576 Cesson-Sévigné (FR); CHAMARET, Christel, 35576 Cesson-Sévigné (FR)
(74) Representative: Huchet, Anne

(57) **Abstract**

A method and apparatus to compactly define and transmit object boundaries. A coordinate pixel may be selected (230) inside an object of interest. The selected coordinate pixel may be used to identify a set of related pixels based on color similarities to the coordinate pixel, and all related pixels are contained within the boundary of the object of interest. Additional coordinate pixels may be selected (240) so that a set of coordinate pixels can be used to identify a combined set of connected pixels (250) that are all included (260) within the boundary of the object of interest.

## Description

### BACKGROUND

Video on demand (VOD) may be transmitted in different formats to various different devices (e.g., television sets, computers, mobile devices, etc.). Each device may have different display criteria and capabilities for rendering content and may also face limitations in the bandwidth available to receive such content. Accordingly, different devices may require different encoded streams of the same content for standard and/or high quality presentation at the device.

One solution to deliver VOD content using a common stream to various different devices is to transmit content with associated metadata. This metadata may be used to enhance the quality of received content based on various criteria. For example, a device may receive metadata to enhance the VOD content for that particular device's capabilities (e.g., wider color space, higher resolutions, sharpening, etc.). In another scenario, metadata may be used to simply provide further efficiencies in a data stream by allowing a compressed video stream with lower bandwidths (e.g., broadcast channels) to be sent with associated metadata, where the metadata can be utilized during rendering to improve the quality of the images.

An example of one improvement in video encoding/decoding has been achieved with respect to how objects in a video stream are transmitted in a video stream. One approach to transmitting boundaries of an object includes a vector based representation of the object by transmitting one or more polygons that correspond to the border of the object. However, this approach has drawbacks when transmitting complex boundaries (e.g., hair, fur, etc.). Complex boundaries would require an extremely large number of vertices of the polygon in order to provide an accurate representation of the complex boundary. Another approach includes a pixel based approach via the transmission of a binary image/mask. However, this approach also has drawbacks in that the amount of required information is proportional to the area in the pixels of the object.

Thus, an improved solution is needed where a small amount of data can be transmitted and be used to define the boundaries of an object regardless of complexity or size of the object.

### SUMMARY

Some embodiments provide a method and apparatus for defining an object boundary with a compact representation of coordinate points. A pixel inside an object of interest may be selected, wherein the selected pixel is not included in a set of connected pixels such that a set of related pixels to the selected pixels is a subset of pixels inside the object of interest.

A set of coordinate pixels may be updated to include the selected pixel. A set of connected pixels may then be updated to include the set of pixels related to the selected pixel. The selecting of a pixel and updating of the set of coordinate pixels and the set of connected pixels may be iteratively performed until the set of connected pixels includes all pixels within the object of interest. Once the set of coordinate pixels is identified, they may be provided for transmission with an encoded data stream.

The preceding Summary is intended to serve as a brief introduction to various features of some exemplary embodiments. Other embodiments may be implemented in other specific forms without departing from the scope of the disclosure.

### BRIEF DESCRIPTION OF THE SEVERAL VIEWS OF THE DRAWINGS

The exemplary features of the disclosure are set forth in the appended claims. However, for purpose of explanation, several embodiments are illustrated in the following drawings.
**Figure 1** illustrates one embodiment of a process for metadata based rendering according to some embodiments;
**Figure 2** illustrates an exemplary process of some embodiments to compute a set of points used to define object boundaries;
**Figure 3** illustrates an image having points for specifying the area of an object according to some embodiments;
**Figure 4** illustrates an alternative approach of combining color areas with polygons for specifying the area of an object; and
**Figure 5** illustrates a schematic block diagram of an exemplary computer system used to implement some embodiments.

### DETAILED DESCRIPTION

The following detailed description describes currently contemplated modes of carrying out exemplary embodiments. The description is not to be taken in a limiting sense, but is made merely for the purpose of illustrating the general principles of some embodiments, as the scope of the disclosure is best defined by the appended claims.

Various features are described below that can each be used independently of one another or in combination with other features. Broadly, some embodiments generally provide a method and apparatus to transmit and/or receive metadata in a data stream that can be used to define the boundaries and/or surface of objects visible on image or video frames from video servers to client or rendering devices. Such embodiments may allow for transmission of complex and/or large object boundaries in a compact form, where the boundaries can be quickly computed at a client terminal device.

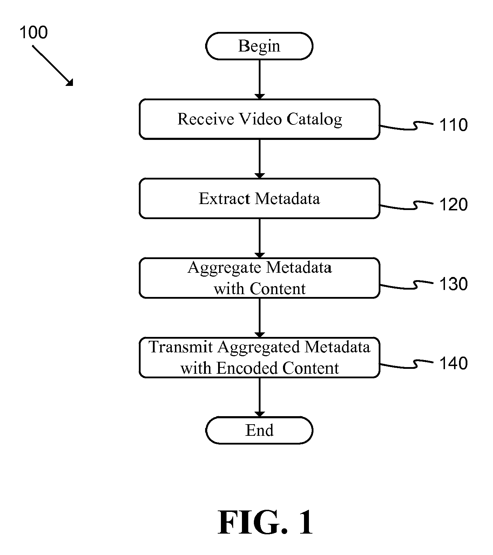

In some embodiments, the metadata may be pre-processed offline, aggregated to a corresponding encoded stream through supplemental enhancement information (SEI) messages, and finally exploited at the client side in the context of image enhancement. **Fig. 1** illustrates one embodiment of a process 100 for metadata based rendering according to some embodiments.

As illustrated in **Fig. 1**, an exemplary process 100 may first receive (at 110) a video catalog. This video catalog may include several pieces of content that may be transmitted to client devices as part of a VOD service, for example. The process 100 may then extract (at 120) metadata related to each piece of content in the video catalog. Once the metadata has been extracted, the metadata may be aggregated (at 130) with its corresponding piece of encoded content on a physical storage medium by the VOD service. The process 100 may then transmit (at 140) the aggregated metadata alongside encoded content to client devices. The client device may then be able to perform metadata based rendering of the content. Accordingly, the computation power available at the client device may be utilized to render object boundaries using metadata created and transmitted based on embodiments of the present disclosure.

On the client device/rendering side, object boundaries may be used for various purposes such as rendering and/or interactivity. For example, objects may be rendered using optimized processing at the client device using a series of areas corresponding to object locations. In other instances, an end user may be able to interact with objects on a screen to get further information about the object. Such objects may not always consist of sematic components of an image and instead may correspond to areas having some visual properties (e.g., saturated areas).

According to some embodiments, the boundary of an object may be described by a set of pixels and/or points. Some embodiments may define an object by computing an area that corresponds to neighboring pixels starting from one or more original pixels, where the neighboring pixels have a color similar to the original pixels. Thus, a boundary of an object may easily be derived based on the original pixels and its corresponding neighboring pixels. The original set of pixels may be selected so that the number of pixels required to define a boundary is minimized. Due to the potential high expense to compute a minimum number of pixels to define a particular object, it may be advantageous to perform this computation offline. It must also be appreciated that the selection of these points be carried out on the image resulting from a decoding, which is the image available at the client, and not on the original image.

In order to compute the set of points and/or pixels that define an object, the following variables may be utilized:
I: the set of the pixels of the image;
O: the set of pixels of the object of interest, where O is a subset of I (O c I);
A*p*: the set of related pixels that can be reached starting at pixel p based on color similarity. *Ap* = {*i_{x,y} st d* (*color*(*p, i_{x,y}*)) < *th and* ∃*j_{x,y}* ∈ *Ap*, *neighbour*(*i_{xy}*,*j_{xy}*)} where *th* is a threshold of color similarity. (Alternatively, A*p* may also be efficiently computed using a connected component graph theory algorithm);
T: the set of coordinates to transmit *p*_{x,y;}
S: the set of connected pixels that include A*p* for all coordinates T.

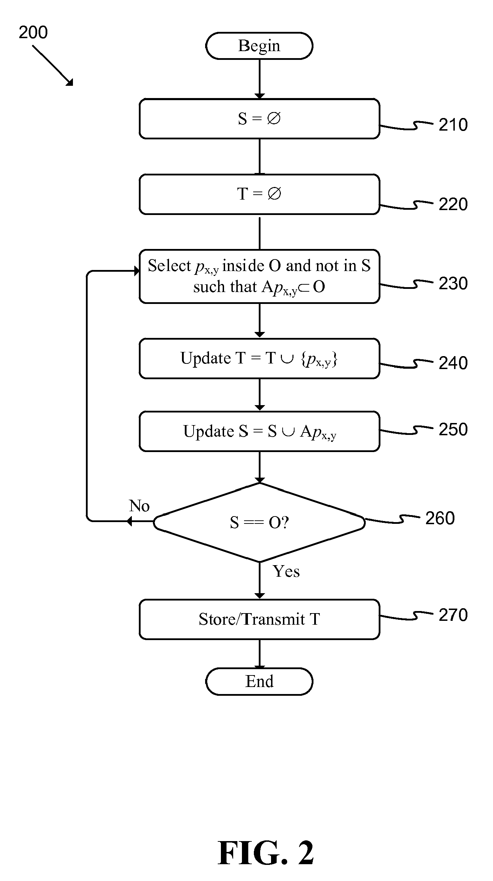

**Fig. 2** illustrates an exemplary process 200 used by some embodiments to compute the set of points and/or pixels that can be used to define an object's boundaries. First, the process 200 may define (at 210) S to be an empty set. The process 200 may then define (at 220) T to be an empty set. Next, the process 200 may select (at 230) a pixel *p*_{x,y} that is inside the object O and not in S such that the set of related pixels A*p*_{x,y} is a subset of O (i.e., A*p*_{x,y} ⊂ O). In some embodiments, A*p*_{x,y} will include the selected pixel *p*_{x,y} and all related pixels, where the related pixels are all pixels not yet in S. The related pixels may be pixels that are neighboring (i.e., pixels immediately above, below, to the left, and to the right) the coordinate pixel and/or its neighboring pixels and pixels that are similar in color.

Then, the process 200 may update (at 240) the set T by including the selected *p*_{x,y} from 230 to set T (i.e., T=T u {p_{x,y}}). The process 200 may also update (at 250) the set S by including pixels A*p*_{x,y} to set S (i.e., S = S u A*p*_{x,y}). The process then compares (at 260) updated set S to O. When the set of pixels in S is equal to the set of pixels in object O, the process 200 ends, otherwise the process returns to 230 and selects another pixel *p*_{x,y} until the pixels in updated set S cover the set of pixels in the object O (i.e., until S == O). In some embodiments, the process 200 will be complete with S includes pixels that sufficiently cover O so as to reproduce the object boundaries based on the application required (e.g., object interactivity, color grading, etc.).

Once process 200 has ended, set T will include all pixels coordinates, *p*_{x,y}, that will be provided, stored, and/or transmitted (at 270) with a corresponding encoded data stream to client devices. At the client side device, the set of pixel coordinates T along with the corresponding image can then be used to reconstruct O.

In some instances, many elements of S may overlap, so various optimizations may be applied by suppressing redundant elements of S while maintaining the constraint S = O in order to reduce the size of T. One general strategy that may be used to improve the results of process 200 may be to select (at 230) a pixel *p*_{x,y} that is at a position which maximizes the distance to the closest pixel in O and not already in S.

A first optimization to further reduce T may be to remove any elements of S that are completely contained in the union of one or more other elements of S. Another possible optimization may be to make the color distance a more general comparison function between color appearance of the pixels. The parameters of this function could then be subject to optimization for each coordinate pixel *p*_{x,y} in order to further reduce the number of coordinates to transmit. These parameters may then be attached to each pixel's coordinates. Further optimization may also be achieved by relaxing the connectivity constraint (neighbor constraint) and allow non connected pixel sets to be defined by A*p* subsets.

Yet another option may be to combine embodiments of the disclosed color based pixel boundary reconstruction with polygonal area definitions when such a combination results in a smaller amount of metadata required to be transmitted.

A further optimization may include defining a figure of merit q, where the size of the metadata (length of T) and the quality of the reconstruction (difference between S and O) and balanced. The value of q may depend on the application of the boundary reconstruction. For example, in interactivity based applications coarse object boundaries may be sufficient, while color grading application may require more precise boundaries. Accordingly, the value of q may be used to generate an optimal T.

According to the above disclosed embodiments, possible metadata for defining a boundary to transmit may be in the below form:

```
      //area1
      [
            {x1, y1, th1}
            { x2, y2, th2 }
            {xn, yn, thn}
      ]
```

For embodiments that combine color area boundaries with polygons, possible metadata for defining a polygon to transmit may be in the below form:

```
      //polygon
      [
            {x1, y1}
            {x2, y2}
            {xn, yn}
      ]
```

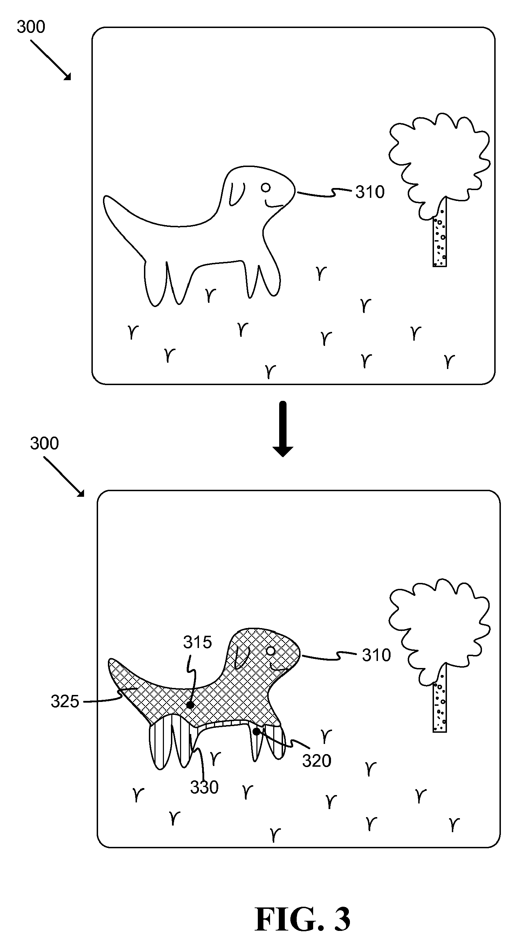

**Fig. 3** illustrates an image 300 having points 315 and 320 for compactly specifying the area of an object 310 according to some embodiments. As illustrated, points 315 and 320 are used to define two separate areas 325 and 330 that, when combined, define the entire area of the object 310. As discussed above, points 315 and 320 may be transmitted as metadata and then used to find a set of similar pixels (i.e., A*p*) that define a first area 325 for point 315 and a second area 330 for point 320.

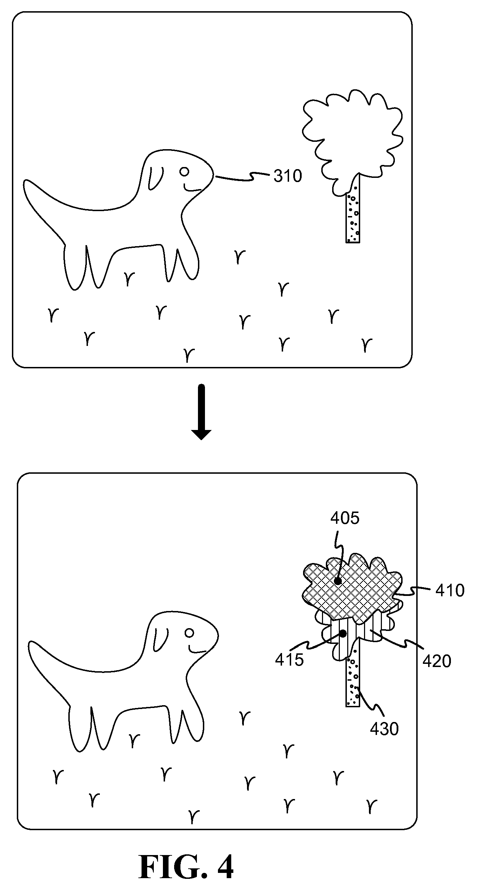

**Fig. 4** illustrates the alternative approach of combining color areas with polygons. Such an approach may be useful to define a complex object that has some similar color areas along with areas of varying colors. As shown, color areas 410 and 420 may be defined using coordinates 405 and 415, while area 430 may be defined as a polygon due to excessive color variations that may exist within the polygon.

After the set of coordinate pixels are selected and included in a corresponding bitstream, the receiving device may be able to use an image enhancement module (e.g., hardware, software, or a combination of hardware and software) to process the metadata related to object boundaries. When the device receives the video bitstream, the device may be able to render images and use the corresponding pixel coordinates for that image to extrapolate the boundaries of one or more objects in the image based on the criteria received for computing related pixels of the coordinate pixels.

Many of the processes and modules described above may be implemented as software processes that are specified as one or more sets of instructions recorded on a non-transitory storage medium. When these instructions are executed by one or more computational element(s) (e.g., microprocessors, microcontrollers, digital signal processors (DSPs), application-specific integrated circuits (ASICs), field programmable gate arrays (FPGAs), etc.) the instructions cause the computational element(s) to perform actions specified in the instructions.

In some embodiments, various processes described above may be implemented completely using electronic circuitry that may include various sets of devices or elements (e.g., sensors, logic gates, analog to digital converters, digital to analog converters, comparators, etc.). Such circuitry may be able to perform functions and/or features that may be associated with various software elements described throughout.

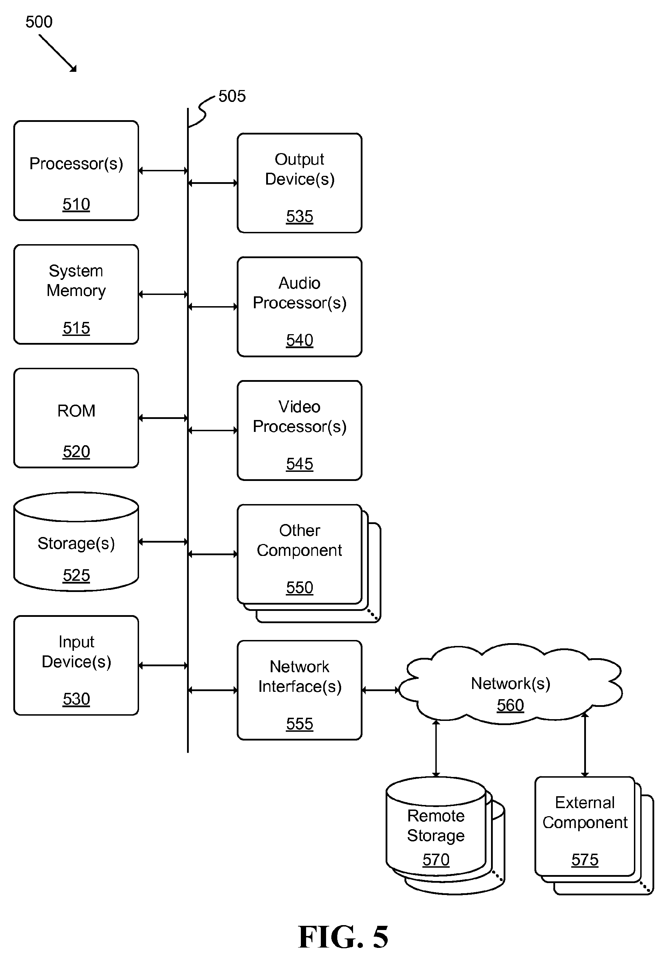

**Fig. 5** illustrates a schematic block diagram of an exemplary computer system 500 used to implement some embodiments. The computer system 500 may be implemented in a video encoder or decoder, a computing apparatus used to extract metadata from video, aggregate metadata into an encoded stream via SEI messages, or a client device that interprets metadata during rendering of images. For example, the processes described in reference to **Figures 1** and **2** may be at least partially implemented using sets of instructions that are executed using computer system 500.

Computer system 500 may be implemented using various appropriate devices. For instance, the computer system may be implemented using one or more personal computers (PCs), servers, mobile devices (e.g., a smartphone), tablet devices, and/or any other appropriate devices. The various devices may work alone (e.g., the computer system may be implemented as a single PC) or in conjunction (e.g., some components of the computer system may be provided by a mobile device while other components are provided by a tablet device).

As shown, computer system 500 may include at least one communication bus 505, one or more processors 510, a system memory 515, a read-only memory (ROM) 520, permanent storage devices 525, input devices 530, output devices 535, audio processors 540, video processors 545, various other components 550, and one or more network interfaces 555.

Bus 505 represents all communication pathways among the elements of computer system 500. Such pathways may include wired, wireless, optical, and/or other appropriate communication pathways. For example, input devices 530 and/or output devices 535 may be coupled to the system 500 using a wireless connection protocol or system.

The processor 510 may, in order to execute the processes of some embodiments, retrieve instructions to execute and/or data to process from components such as system memory 515, ROM 520, and permanent storage device 525. Such instructions and data may be passed over bus 505.

System memory 515 may be a volatile read-and-write memory, such as a random access memory (RAM). The system memory may store some of the instructions and data that the processor uses at runtime. The sets of instructions and/or data used to implement some embodiments may be stored in the system memory 515, the permanent storage device 525, and/or the read-only memory 520. ROM 520 may store static data and instructions that may be used by processor 510 and/or other elements of the computer system.

Permanent storage device 525 may be a read-and-write memory device. The permanent storage device may be a non-volatile memory unit that stores instructions and data even when computer system 500 is off or unpowered. Computer system 500 may use a removable storage device and/or a remote storage device as the permanent storage device.

Input devices 530 may enable a user to communicate information to the computer system and/or manipulate various operations of the system. The input devices may include keyboards, cursor control devices, audio input devices and/or video input devices. Output devices 535 may include printers, displays, audio devices, etc. Some or all of the input and/or output devices may be wirelessly or optically connected to the computer system 500.

Audio processor 540 may process and/or generate audio data and/or instructions. The audio processor may be able to receive audio data from an input device 530 such as a microphone. The audio processor 540 may be able to provide audio data to output devices 540 such as a set of speakers. The audio data may include digital information and/or analog signals. The audio processor 540 may be able to analyze and/or otherwise evaluate audio data (e.g., by determining qualities such as signal to noise ratio, dynamic range, etc.). In addition, the audio processor may perform various audio processing functions (e.g., equalization, compression, etc.).

The video processor 545 (or graphics processing unit) may process and/or generate video data and/or instructions. The video processor may be able to receive video data from an input device 530 such as a camera. The video processor 545 may be able to provide video data to an output device 540 such as a display. The video data may include digital information and/or analog signals. The video processor 545 may be able to analyze and/or otherwise evaluate video data (e.g., by determining qualities such as resolution, frame rate, etc.). In addition, the video processor may perform various video processing functions (e.g., contrast adjustment or normalization, color adjustment, etc.). Furthermore, the video processor may be able to render graphic elements and/or video.

Other components 550 may perform various other functions including providing storage, interfacing with external systems or components, etc.

Finally, as shown in **Fig. 5**, computer system 500 may include one or more network interfaces 555 that are able to connect to one or more networks 560. For example, computer system 500 may be coupled to a web server on the Internet such that a web browser executing on computer system 500 may interact with the web server as a user interacts with an interface that operates in the web browser. Computer system 500 may be able to access one or more remote storages 570 and one or more external components 575 through the network interface 555 and network 560. The network interface(s) 555 may include one or more application programming interfaces (APIs) that may allow the computer system 500 to access remote systems and/or storages and also may allow remote systems and/or storages to access computer system 500 (or elements thereof).

As used in this specification and any claims of this application, the terms "computer", "server", "processor", and "memory" all refer to electronic devices. These terms exclude people or groups of people. As used in this specification and any claims of this application, the term "non-transitory storage medium" is entirely restricted to tangible, physical objects that store information in a form that is readable by electronic devices. These terms exclude any wireless or other ephemeral signals.

It should be recognized by one of ordinary skill in the art that any or all of the components of computer system 500 may be used in conjunction with some embodiments. Moreover, one of ordinary skill in the art will appreciate that many other system configurations may also be used in conjunction with some embodiments or components of some embodiments.

In addition, while the examples shown may illustrate many individual modules as separate elements, one of ordinary skill in the art would recognize that these modules may be combined into a single functional block or element. One of ordinary skill in the art would also recognize that a single module may be divided into multiple modules.

The foregoing relates to illustrative details of exemplary embodiments and modifications may be made without departing from the scope of the disclosure as defined by the following claims.

## Claims

1. A method for defining an object boundary in an image comprising:
selecting (230) a pixel inside an object of interest, wherein the selected pixel is not included in a set of connected pixels such that a set of related pixels to said selected pixel is a subset of pixels inside the object of interest;
updating (240) a set of coordinate pixels to include the selected pixel;
updating (250) the set of connected pixels to include the set of related pixels to said selected pixel;
iteratively selecting another pixel, updating the set of coordinate pixels, and updating the set of connected pixels until the set of connected pixels includes all pixels within the object of interest (260); and
providing the set of coordinate pixels (270).

2. The method of claim 1, wherein the set of related pixels are similar pixels based on a color similarity to the selected pixel.

3. The method of claim 2, wherein the color similarity is based on a comparison function between color appearances of the selected pixel and the related pixels.

4. The method of claim 3, further comprising:
optimizing parameters of the comparison function for each selected pixel so that the total number of coordinate pixels in the set of coordinate pixels is minimized; and
attaching the parameters to corresponding coordinate pixels.

5. The method of claim 1, further comprising removing elements within the set of connected pixels that are completely contained within a union of one or more different sets of related pixels.

6. The method of claim 1, wherein the selected pixel is at a maximum distance to the closest pixel in the object of interest that is not already included in the set of related pixels.

7. The method of claim 1, wherein the set of related pixels are computed using a connected component graph theory algorithm.

8. The method of claim 7 further comprising relaxing a connectivity constraint to allow a non-connected pixel set to be defined by one or more subsets of related pixels.

9. The method of claim 1 further comprising combining the set of connected pixels with a defined polygonal area to define the object boundary.

10. The method of claim 1 further comprising:
defining a figure of merit variable based on balancing a size of the set of coordinate pixels and a quality of boundary reconstructions, wherein the quality of boundary reconstruction is based on a difference between the set of connected pixels and the set of pixels in the object of interest.

11. An apparatus for extracting metadata for defining object boundaries comprising:
a processor for executing a set of instructions; and
a non-transitory medium that stores the set of instructions, wherein the set of instructions comprises the method of claims 1-10.

12. A method for applying metadata-based enhancement to an image comprising:
receiving metadata for defining a boundary of at least one object in the image, wherein the metadata includes coordinate pixels selected according to the method of claims 1-10; and
using the coordinate pixels to extrapolate the boundary of the at least one object.

13. An apparatus for applying metadata-based enhancement to an image comprising:
a processor for executing a set of instructions; and
a non-transitory medium that stores the set of instructions, wherein the set of instructions comprises the method of claim 12.

14. Computer program comprising program code instructions executable by a processor for implementing the steps of a method according to at least one of claims 1 to 10.
